# EUROPÄISCHE PATENTSCHRIFT

(11) **EP 0 747 733 B1**
(45) Veröffentlichungstag und Bekanntmachung des Hinweises auf die Patenterteilung: **31.10.2001**
(21) Anmeldenummer: 96109247.5
(22) Anmeldetag: 10.06.1996
(51) Int. Cl.: G01V 3/10

(54) **Einrichtung zur Feststellung metallisch leitender Teile**
Detection arrangement for conductive metallic pieces
Dispositif de détection pour des pièces conductives métalliques

(30) Priorität: 10.06.1995 DE 19521266
(43) Veröffentlichungstag der Anmeldung: 11.12.1996
(73) Patentinhaber: Mesutronic Gerätebau Gmbh, 94259 Kirchberg/Wald (DE)
(72) Erfinder: Artinger, Manfred, D-94513 Schönberg (DE)
(74) Vertreter: Schlenk, Manfred, Dipl.-Ing.

(56) Entgegenhaltungen:
- DE-A- 3 228 447
- US-A- 4 700 139
- US-A- 4 868 910
- TRANSACTIONS OF THE INSTITUTE OF MEASUREMENT AND CONTROL, APRIL-JUNE 1986, UK, Bd. 8, Nr. 2, ISSN 0142-3312, Seiten 76-84, XP002035413 ABBAS H J ET AL: "The detection and location of foreign metal objects in conveyed products"

## Beschreibung

Die Erfindung betrifft eine Einrichtung zur Erzeugung eines Erkennungssignals beim Auftreten von metallisch leitenden Teilen in einem zumindest weitgehend nichtleitenden Förderstrom.

Derartige Einrichtungen sind beispielsweise durch die Deutschen Offenlegungsschriften 37 14 009 A1 und 40 171 780 A1 bekannt. Man benötigt sie zum Beispiel zur Feststellung von Metallteilen in einem im wesentlichen nur aus Papier oder recyclingfähigem Kunststoff bestehenden Förderstrom, der einer Zerkleinerungsanlage (Shredder) für die Wiederaufbereitung zugeführt wird. Auch in pneumatischen Förderanlagen für Granulate aus Kunststoff und in der Tabak-und in der Textilindustrie sowie in der Lebensmittelindustrie kommen sie zum Einsatz. Sind nämlich im Fördergut massive Metallteile enthalten, so kann dies zu Störungen im Arbeitsablauf, wenn nicht gar zur Zerstörung von Maschinenteilen führen, auch wenn die Teile nur klein sind. Bei Textilien sind aus verständlichen Gründen Metallteile und Drahtreste von Bürstmaschinen ebenfalls störend. Andererseits kommen oft auch folienartige leitende Teile, wie die Abdeckungen von in Kunststoffbechern verpackter Ware vor, die in der Regel nicht auszusortieren sind, weil sie entweder als Verpackung dienen oder ihre mechanische Widerstandskraft nur gering ist und damit von ihnen keine Gefährdung nachfolgender Maschinen zu erwarten ist.

Das Erkennungssignal dient dabei zur Betätigung von Schutzeinrichtungen, wie optischen und/oder akustischen Signalmitteln, von Abschalteinrichtungen der Fördereinrichtung, oder auch zur Umleitung des ein störendes Teil enthaltenden Förderstromes in ein Sammelgefäß oder dergleichen.

Die Einrichtungen arbeiten meist in der Weise, daß von einem Wechselstromgenerator über ein Sendespulensystem in einem zu überwachenden Abschnitt des Förderstromes ein elektromagnetisches Wechselfeld aufgebaut wird, dessen beim Passieren eines Teiles ausgelöste Amplituden- und Phasenänderung durch ein Empfangsspulensystem und eine nachfolgende Auswerteschaltung in Form eines Phasen-Änderungssignals und eines Amplituden-Änderungssignals erfaßt werden, die der Ableitung des Erkennungssignals dienen. Um auch kleine, massive und metallisch leitende Teile noch sicher erkennen zu können, wird bei bekannten Einrichtungen von der Tatsache Gebrauch gemacht, daß der Einfluß leitender Teile mit der Frequenz des elektromagnetischen Wechselfeldes zunimmt Die bekannten Anlagen arbeiten aus diesem Grund bei relativ hohen Frequenzen, wie wenigstens 16 kHz. Meistens liegt die Frequenz noch wesentlich höher. Die damit verbundene Steigerung der Empfindlichkeit bringt es aber mit sich, daß auch an sich nicht auszusortierende, wie folienartige Teile, Erkennungssignale auslösen und je nach der Art der für die Förderanlage vorgesehenen Schutzmittel diese z.B. stillsetzen oder den Förderstrom unerwünscht umleiten. Die Erkennung kleiner massiver, metallisch leitender Teile bereitet trotzdem häufig noch immer gewisse Schwierigkeiten, weil die von kleinen Teilen verursachte Signalamplitude gering gegenüber der von folienartigen, metallisch leitenden Teilen ist. Der Stand wird allgemein auch in der Veröffentlichung "Detecting metal particles in nonmetallic materials" in der Zeitschrift Automation, Dezember 1965, Seiten 83 bis 87 beschrieben. Derartige Meßverfahren und Einrichtungen werden auch zur Unterscheidung nach Metallarten und zur Erkennung bestimmter metallischer Gegenstände eingesetzt, wie z.B. die DE-PS 28 37 265 und die DE-PS 32 28 447 ausweisen. Nach der DE-PS 28 37 265 wird zur Identifizierung von leitfähigen Gegenständen die auf die Betriebsfrequenz normierte Wirkwiderstandskomponente bei mehreren Frequenzen gemessen und daraus auf die Materialart geschlossen. Eine exakte Untersuchung nach dieser Methode verursacht jedoch nicht nur einen hohen Aufwand, sondern ist auch relativ schwierig, weil für jede Materialart in Abhängigkeit von dem jeweils gesuchten Gegenstand oder Teil in einem Speicher Vergleichswerte vorgehalten werden müssen. Der in der DE-PS 32 28 447 beschriebene Lösungsweg nutzt demgegenüber die bekannte materialabhängige Phasenverschiebung zwischen dem gesendeten und dem empfangenen Wechselfeld beim Passieren eines störenden Teiles als Kriterium für die Materialart, jedoch bereitet auch hierbei die sichere Erkennung, vor allem kleiner, jedoch störender Teile nach wie vor Schwierigkeiten.

Der Erfindung liegt die Aufgabe zugrunde, diesen Schwierigkeiten zu begegnen, vor allem auch kleine metallisch leitende, massive Teile sicher zu erkennen, und zwar nicht nur als solche, sondern auch hinsichtlich ihrer Materialart.

Dies wird, ausgehend von einer Einrichtung zur Erzeugung eines Erkennungssignals beim Auftreten von metallisch leitenden Teilen in einem zumindest weitgehend nichtleitenden Förderstrom, bei der von einem Wechselstromgenerator über ein Sendespulensystem in einem zu überwachenden Abschnitt des Förderstromes ein elektromagnetisches Wechselfeld aufgebaut wird, dessen beim Passieren eines Teiles ausgelöste Amplituden- und Phasenänderungen durch ein Empfangsspulensystem und eine nachfolgende Auswerteschaltung in Form eines Phasen-Änderungssignals und eines Amplituden-Änderungssignals erfaßt werden, die der Ableitung eines materialspezifischen Erkennungssignals dienen, nach der Erfindung dadurch erreicht, daß eine Stufe zur vektoriellen Addition der beiden Änderungssignale vorgesehen ist, daß ein Phasenvergleicher vorgesehen ist, dem zum einen das vektorielle Summensignal und zum anderen eines der beiden Änderungssignale zugeführt werden und dessen Ausgangssignal (Phasenwinkelsignal) dem Phasenwinkel zwischen dem vektoriellen Summensignal und einem der beiden Änderungssignale entspricht, daß an den Phasenvergleicher eine Bewertungsstufe für das Phasenwinkelsignal angeschaltet ist, die aus diesem ein materialspezifisch bewertetes Steuersignal ableitet, und daß an die Stufe zur vektoriellen Addition eine regelbare Ausgangsstufe angeschaltet ist, die als Regelsignal das Steuersignal erhält und deren Ausgangssignal als materialspezifisches Erkennungssignal für ein im Förderstrom befindliches, zu erkennendes Teil dient.

Zweckmäßig wird die Bewertungsstufe derart ausgebildet ist, daß sie in den, anderen Materialien zugeordneten Amplitudenbereichen des Phasensignals, das Steuersignal gegensinnig im Vergleich zu dem zu erkennenden Material verändert. Vorteilhaft ist es hierbei, wenn die Bewertungsstufe derart ausgebildet ist, daß für ein zu erkennendes Material das Steuersignal den Amplitudenwert des Ausgangsignals weitgehend unverändert beläßt, während der Amplitudenwert des Ausgangssignals für andere Materialien vermindert wird. Es ist auch möglich den Amplitudenwert des Ausgangssignals für ein zu erkennendes Material mittels des Steuersignals gegenüber den Werten für andere Materialien in einem dem jeweiligen Einzelfall angepaßten Umfang anzuheben.

Vorteilhaft kann die Bewertungsstufe als eine Schwellwertschaltung ausgebildet werden, die in den, anderen Materialien zugeordneten Amplitudenbereichen des Phasensignals, das Steuersignal gegensinnig im Vergleich zu dem zu erkennenden Material verändert. In diesem Sinne kann die Bewertungsschaltung auch ein Amplitudenvergleicher mit einer, in der Amplitude vorzugsweise wählbaren Vergleichsspannung sein, der bei Übereinstimmung ein Signal abgibt.

Von besonderem Vorteil ist es, wenn an die Auswertungsschaltung für die Ableitung beider Änderungssignale jeweils ein Analog-Digital-Wandler angeschaltet wird, der die Änderungsignale in Digitalform umsetzt, und wenn zumindest die Stufe zur vektoriellen Addition und der Phasenververgleicher als digital arbeitende Schaltungen ausgebildet werden. Es empfiehlt sich jedoch auch die Bewertungsstufe als digital arbeitende Schaltung auszubilden. Hierfür ist es vorteilhaft, wenn die Ausgangsstufe als Multiplizierer ausgebildet ist, der als Multiplikanden das vektorielle Summensignal und als Multiplikator das Steuersignal erhält. Zweckmäßig ist es an die Auswertungsschaltung für die Ableitung beider Änderungssignale jeweils einen Analog-Digital-Wandler anzuschalten, die die Änderungsignale in Digitalform umsetzen, und weiterhin die Stufe zur vektoriellen Addition und den Phasenververgleicher als digital arbeitende Schaltungen auszuebilden. Diese Ausführungsformen ermöglichen es in vorteilhafter Weise einen Speicher für die Abspeicherung von Steuersignalwerten für vorgegebene Materialien vorzusehen. Die materialspezifische Auslesung des Speichers kann dann mittels des Phasensignals vorgenommen werden. Dabei kann mit Vorteil dem Speicher eine Eingabevorrichtung zur Abspeicherung von Steuersignalwerten für vorgegebene Materialien in seine Speicherzellen zugeordnet werden.

Die erfindungsgemäße Einrichtung eignet sich mit Vorteil auch zur Erzeugung eines Betätigungssignal für die eingangs erwähnten Schutz- und Ausscheidevorrichtungen. Das ist dadurch erreichbar, daß zusätzlich eine, ein Betätigungssignal abgebende Betätigungsstufe vorgesehen ist, die als Eingangssignal das durch das Steuersignal veränderte vektorielle Summensignal erhält, und daß die Betätigungsstufe eine Schwellwertschaltung mit vorzugsweise einstellbarer Schwelle enthält, die derart ausgebildet ist, daß am Ausgang der Betätigungsstufe nur beim Überschreiten der Schwelle durch das veränderte vektorielle Summensignal ein Betätigungssignal abgegeben wird. Dabei wird zweckmäßig eine Vorrichtung zur manuellen Einstellung der Schwelle in der Schwellwertschaltung vorgesehen.

Wie bereits erwähnt, ist der gemessene Phasenwinkel materialcharakteristisch. Wenn man also für Phasenwinkel eines nicht störenden Teiles, wie einer Aluminiumfolie, die Ansprechempfindlichkeit wesentlich vermindert oder sogar zu Null macht, für andere Materialien, wie VA-Stahl beläßt, so spricht die Einrichtung - wie Untersuchungen gezeigt haben - beispielsweise auf eine kleine Schraubenmutter der metrischen Mutterngröße M 3, die aus VA-Stahl besteht, eindeutig an, während selbst ein Knäuel aus Aluminiumfolie in der Größe eines Tennisballes noch keine Reaktion auslöst.

Nachstehend wird die Erfindung anhand von in einer Zeichnung wiedergegebenen Ausführungsbeispielen näher erläutert. In dieser zeigt
- die Figur 1: die Ansicht einer Metalldetektions-Einrichtung, die ein Förderband umschließt,
- die Figur 2: einen Schnitt durch eine Metalldetektions-Einrichtung nach der Figur 1,
- die Figur 3: ein Schaltbild mit der Sendespule für die Erzeugung des elektromagnetischen Wechselfeldes in einem vorgegebenen Raumbereich und einem zwei Spulen umfassenden Spulensystem für den Empfang des Wechselfeldes,
- die Figur 4: die Ableitung der Signal U1 und U2 bei nur einer Empfangsspule,
- die Figur 5: das Blockschaltbild einer Schaltung zur Ableitung des Amplituden-Änderungssignals AS und des Phasen-Änderungsignals PS bei Passieren eines aufzufindenden Teiles im Förderstrom und deren weitere Verarbeitung zum Erkennungssignal ES,
- die Figur 6: ein Schwingungsdiagramm zur Verdeutlichung der Wirkung von leitenden Teilen im Fördergutstrom auf das über das Spulensystem aufgenommene Signal,
- die Figur 7: den zeitlichen Verlauf des beim Durchgang eines metallisch leitenden Teiles auftretenden Signals Uemp,
- die Figur 8: eine Möglichkeit für die 90°-Phasenschiebung von PS,
- die Figur 9: die vektorielle Beziehung von AS, PS und VS,
- die Figur 10: eine schaltungstechnische Möglichkeit für die Auswertung von AS und PS in Digitaltechnik
- die Figur 11: ein Diagramm für einen Materialfaktor-Verlauf und
- die Figur 12: ein weiteres Ausführungsbeispiel, bei dem die Signalauswertung nur zu bestimmten Zeitpunkten erfolgt.

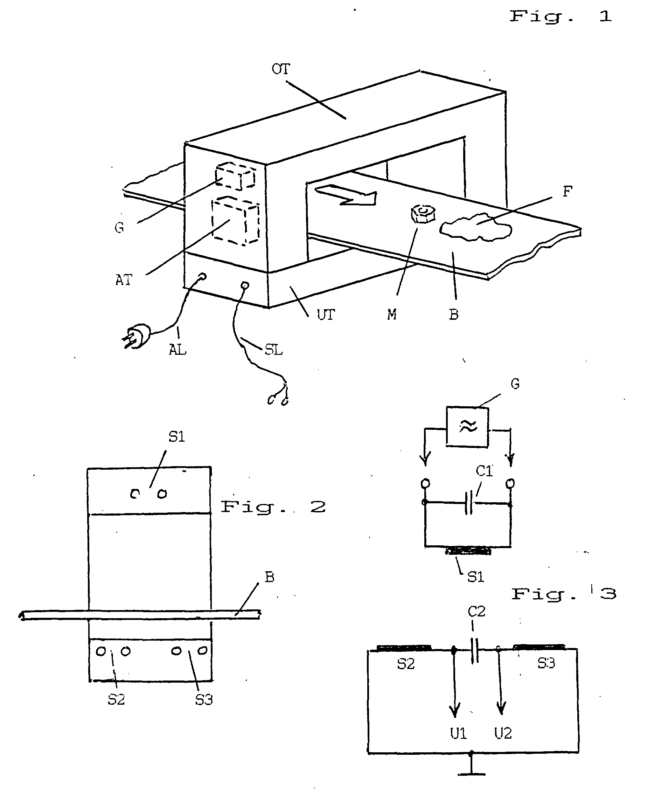

Die in der Figuren 1, 2 und 3 schematisch dargestellte Einrichtung besteht aus zwei Teilen OT und UT, von denen das eine U-förmig und das andere als flaches Auflager ausgebildet ist. Die beiden Teile umschließen ein Förderband B, das in Richtung des aufgezeichneten Pfeiles das auf unerwünschte metallische Teile zu überprüfende Gut durch die Einrichtung transportiert. In dem Teil OT ist eine Sendespule S1 angeordnet. In dem Teil OT sind ferner ein die Sendespule mit Wechselstrom speisender Generator G und eine Schaltung A zur Ableitung eines Erkennungssignals von im Fördergut enthaltenen, metallisch leitenden Teilen angeordnet. Im Auflager UT sind zwei Empfangsspulen S2 und S3, in Förderrichtung versetzt, angeordnet. Ausführungsform und Anordnung der Spulen sind, ebenso wie die Gehäuseform und die Form und Art der Durchlaßöffnung in an sich bekannter Weise dem Anwendungsfall angepaßt. Über nicht näher dargestellte Kontakte sind ihre Anschlüsse zu der Schaltung AT im Teil OT geführt. Eine Anschlußleitung AL dient der Verbindung der Einrichtung mit der Betriebsstromversorgung. Eine Ausgangsleitung SL dient zur Weiterleitung eines Erkennungssignals an eine der einleitend erwähnten Schutzvorrichtungen.

Aus der in der Figur 3 gezeigten Schaltung ist entnehmbar, daß die Sendespule S1 durch einen Kondensator C1 und das Spulenpaar S2, S3 durch einen Kondensator C2 jeweils zu einem elektrischen Schwingkreis vervollständigt sind. Die beiden Schwingkreise S1,C1 bzw. S2,S3,C2 sind so abgestimmt, daß sie ein auf die Frequenz des Wechselstromes abgestimmtes Bandfilter bilden, der vom Generator G zugeführt wird. Durch die Unterteilung der Spule und damit der Induktivität im Schwingungskreis S2,S3,C2 ist es möglich zwei, gegenüber dem Bezugspotential BP, gegenphasige Signale U1 und U2 abzunehmen und der Schaltung A zuzuführen. Zu erwähnen ist, daß die Signale U1 und U2 nicht absolut gleich groß sein müssen, was eine hohe Symmetrie der beiden Empfangsspulen erfordern würde. Bei einer leichten Unsymmetrie wird nur eines dieser beiden Signale etwas größer; die Auswertbarkeit der beiden Änderungssignale, die bei Passieren eines Teiles auftreten, verbleibt unverändert.

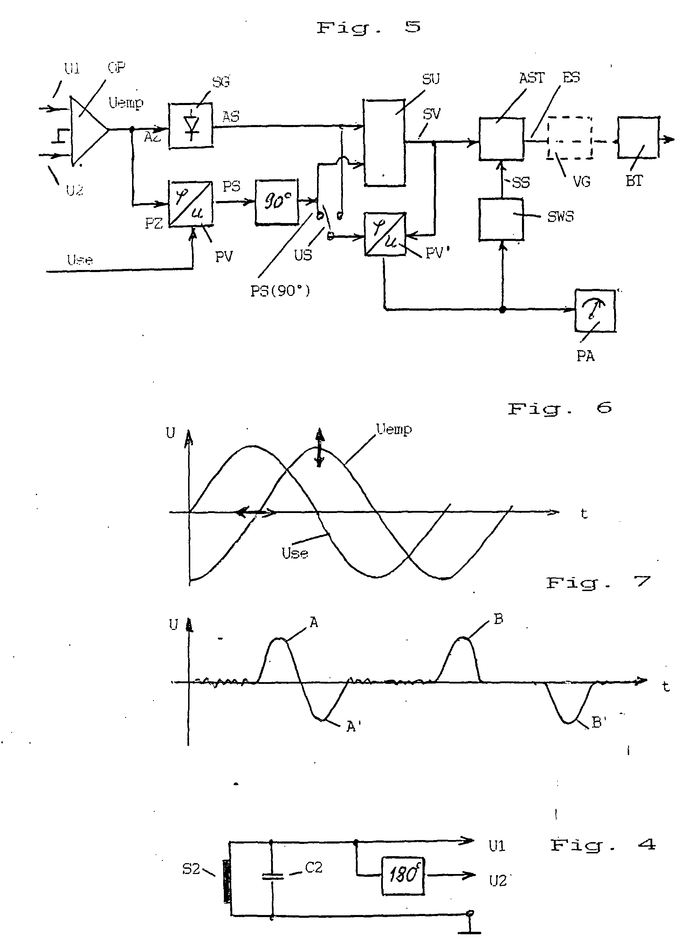

Die Einrichtung nach der Figur 1 verwendet sekundärseitig ein aus zwei Spulen bestehendes Spulensystem. Man kann auch mit nur einer Spule arbeiten. In diesem Fall ist, wie in der Figur 4 gezeigt, das Signal U1 an dem Schwingkreis abzugreifen und zusammen mit dem Signal Use des Generators G den beiden Eingängen des Operationsverstärkers OP zur Differenzbildung zuzuführen. Sollte es im Einzelfall aus schaltungstechnischen Gründen, wie der Art des Operationsverstärkers erforderlich sein, daß die von der Einzelspule abgenommene Spannung eine gegensinnige Phasenlage hat, so empfiehlt es sich, wie in der Figur 4 angedeutet, über eine Phasenumkehrstufe PU an sich bekannter Art aus U1 ein um 180° phasenverschobenes Signal U2 abzuleiten und dem Operationsverstärker OP anstelle von U1 zuzuleiten.

Die Schaltung AT beginnt, wie die Figur 5 zeigt, mit einem durch einen sogenannten Operationsverstärker gebildeten Differenz-Verstärker OP, an dessen Ausgang eine Aufteilung in einen Amplitudenzweig AZ und einen Phasenzweig PZ vorgenommen ist. Im Amplitudenzweig AZ wird mittels einer Gleichrichterstufe SG der Betragswert des Signales Uemp bestimmt, der das Amplituden-Änderungssignal AS darstellt. Im Phasenzweig PZ ist ein Phasendiskriminator PV eingefügt, der als Phasenbezugssignal das Signal Use des Generators G erhält. Am Ausgang von PV steht das Phasen-Änderungssignal PS an.

In der Figur 6 ist der Einfluß des Durchgangs eines durch das Förderband an der Spule S2 vorbeibewegten, metallisch leitenden Teiles schematisch dargestellt. Die von dem Wechselfeld Use der Spule S1 in dem Teil verursachten Wirbelströme verändern sowohl die Amplitude als auch die Phasenlage des über S2 und S3 empfangenen Signals Uemp, das ohne solche Feldstörungen um 90° gegen Use phasenverschoben ist. Die Änderungsbereiche sind durch Pfeile angedeutet.

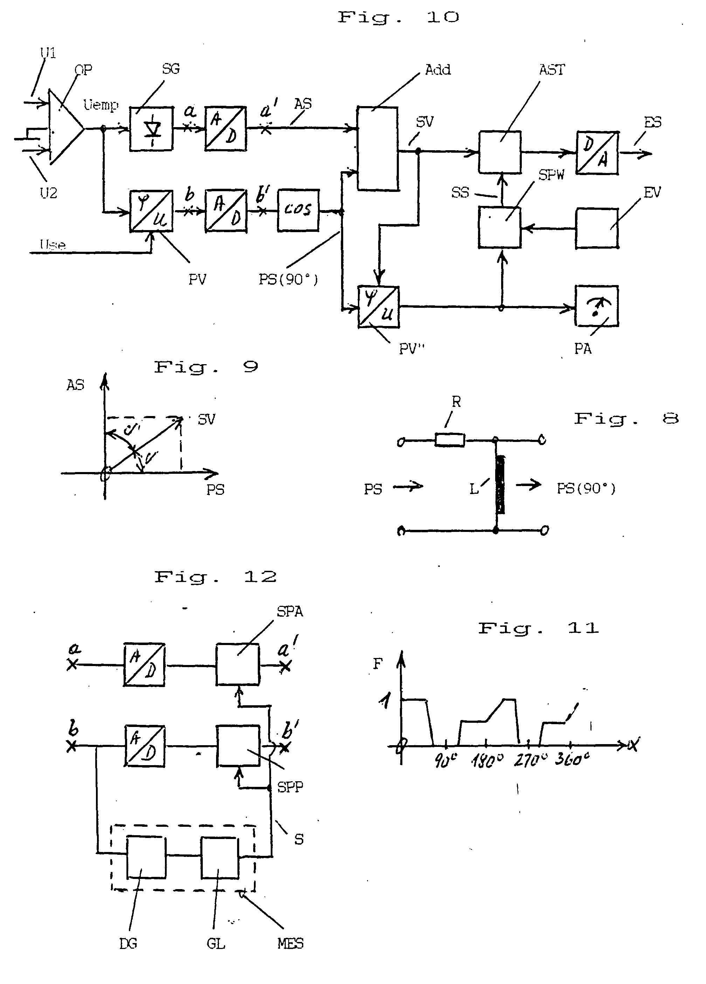

In der Figur 7 ist der Verlauf des Amplituden-Änderungssignals AS in zwei Fällen wiedergegeben. Ist das Teil kurz gegenüber dem Abstand der Spulen S2 und S3, entsteht bei jedem Passieren einer der beiden Spulen ein Signal, wie es in der Figur 7 mit A, A' gekennzeichnet ist. Ist hingegen das Teil demgegenüber lang, so ist der Verlauf von AS etwa so, wie es durch B, B' angedeutet ist. Für das Phasen-Änderungssignal PS ist der Verlauf entsprechend.

Die weitere Verarbeitung besteht darin, daß AS und PS vektoriell addiert werden. Hierzu wird eine 90° Phasenverschiebung zwischen AS und PS eingeführt, beispielsweise dadurch, daß wie in der Figur 5 gezeigt, in den Leitungszweig von PS ein 90° Phasenschieber eingefügt wird. Dieser kann beispielsweise, wie in der Figur 8 schematisch gezeigt, aus einer Widerstand-Induktivität-Kombination in an sich bekannter Weise bestehen, bei der das phasenverschobene Signal an der Induktivität abgenommen wird. Der Umschalter US deutet an, daß statt PS(90°) auch AS für den Phasenvergleich in PV' verwendet werden kann.

Die gegenseitig um 90° phasenverschobenen Signale AS und PS(90°) werden in einem Summierer SU zu dem vektoriellen Summensignal SV zusammengesetzt. Dies weist einen vom Material des im Förderstrom abhängigen Phasenwinkel *a* beziehungsweise α' zu den Änderungssignalen auf. Der Betrag des Summenvektors SV ist zugleich ein Kriterien für die Materialmenge des zu ermittelnden Teiles.

Der Phasenwinkel α wird beim Ausführungsbeispiei dadurch erhalten, daß PS(90°) und SV einem Phasendiskriminator PV' zugeführt werden, der ein der Phasendifferenz entsprechendes Gleichstromsignal umwandelt, dessen Amplitude die Phasendifferenz widergibt, die damit beispielsweise in einem Anzeigeinstrument PA gemessen und damit angezeigt werden kann. Dieses Signal dient bei dem Ausführungsbeispiel jedoch zusätzlich zur Steuerung eines Ausgangsstufe AST, die das eigentliche Erkennungssignal ES erzeugt.

Da das von PV' erhaltene Signal mit seiner Amplitude nur vom Phasenwinkel α bzw. α' abhängig ist, kann die Amplitude als Ausage für das Material des zu ermittelten Teiles benutzt werden. Unterschiedliche Materialien ergeben also unterschiedliche Amplitudenwerte. Durch eine Schwellwertschaltung SWS ist für bestimmte Phasenwinkel α beziehungsweise α' das von PV' kommende Steuersignal SS winkelspezifisch in der Amplitude beeinflussbar und damit für die winkelbeziehungsweise materialspezifische Steuerung von AST verwendbar. Hierzu kann SWS als Schwellwertschaltung mit einer oberen und einer unteren Schwelle ausgebildet werden, die nur solche Signale passieren läßt, die in ihrer Amplitude zwischen ihren beiden Amplitudenschwellwerten liegen. Durch Einstellung der beiden Amplitudenschwellen läßt sich somit ein gewünschter Winkelbereich und damit ein bestimmter Materialbereich auswählen.

In der Ausgangsstufe AST wird das von SWS erhaltene Signal dazu verwendet, daß das ihr zugeführte Signal SV nur für den bestimmten Phasenwinkelbereich passieren kann, während für außerhalb des Winkelbereichs einzuordnende Materialien eine Abschwächung oder auch eine vollständige Unterdrückung erfolgt. Das ist zum Beispiel dadurch in einfacher Weise realisierbar, daß die Ausgangsstufe AST ein durch das Signal von SWS steuerbarer Dämpfungsregler ist, der durch das ihm zugeführte Signal aufgeregelt wird. Es dient dann in an sich bekannter Weise zur Absteuerung einer Betätigungsstufe BT zur Aktivierung einer der einleitend erwähnten Schutz- oder Melde-Vorrichtungen. Durch ein zwischengeschaltetes Verzögerungsglied VG lassen sich eventuelle Laufzeit-Ungenauigkeiten zwischen dem Passieren des Spulensystems durch ein festzustellendes Teil und der Schutz- oder Melde-Vorrichtung ausgleichen.

Es ist auch möglich die Schwellwertschaltung so auszubilden, daß sie nur für solche Amplitudenwerte das Steuersignal vermindernd oder unterdrückend beeinflußt, die dem Phasenwinkelbereich des zu erkennenden Materials entsprechen. Das kann durch eine SWS nachgeschaltete Stufe erfolgen, die durch dem zu erkennenden Material entsprechende Steuersignale geschlossen wird, also kein Signal mehr abgibt und für anderen Materialien zugeordnete Steuersignale öffnet, womit das Steuersignal passieren kann. In diesem Fall ist AST gegensinnig zum vorstehend behandelten Fall zu regeln. Auch in diesem Fall ist ES somit eine Funktion des materialspezifischen Steuersignals SS und der Amplitude von SV.

Das Erkennungssignal ES kann erforderlichenfalls über eine weitere Schwellenschaltung, die nur einen geforderten Amplitudenwert überschreitende Signalwerte und/oder einen einstellbaren Dämpfungsregler mit nachgeordneter Schwellenschaltung zur Steuerung der eingangs erwähnten Schutzeinrichtungen als Betätigungssignal verwendet werden. Es läßt sich damit sozusagen die Ansprechempfindlichkeit regeln; denn sehr kleine Teile aus einem sogenannten kritischen Material müssen manchmal nicht unbedingt ausgeschieden werden.

In der Figur 10 ist eine zu der Figur 5 entsprechende Schaltung gezeigt, die weitgehend auf digitaler Basis arbeitet. Zu diesem Zweck werden die Ausgangssignale von SG und PV über Analog-Digital-Wandler A/D in digitale Signale, zum Beispiel in einem 16-bit-Code umgesetzt, wie er in üblichen Rechnern verwendet wird. Die 90°-Phasenschiebung kann dann mittels der aus Taschenrechnern beispielsweise bekannten Cosinus-Umrecheneinheit erhalten werden. Die den Signalen AS und PS(90°) entsprechenden Digitalsignale werden dann in einem Addierer Add zum Summenvektor-Signal geometrisch addiert. Das digitale Summensignal SV' und das Signal PS(90°)' werden dann in einem digital arbeitenden Phasendiskriminator PV'' zur Phasenermittlung verwendet. Das Ausgangsignal von Add wird dann - in zur Figur 5 gleichartiger Weise - der Ausgangsstufe AST und einem Phasendiskriminator PV" zugeführt. Unterschiedlich zur Figur 5 wird das Ausgangssignals des Phasendiskriminators PV" zur Ansteuerung eines Speichers SPW verwendet, in dem materialspezifische Steuersignalwerte abgespeichert sind. Das Ausgangssignal von PV" dient dabei sozusagen als Ansteuer-Adresse für die entsprechende Speicherzelle in SPW, die ihren eingespeicherten Wert (Materialfaktor) als Steuersignal SS dann an AST zu Beeinflussung von SV im anhand der Figur 5 erläuterten Sinne gibt. Die in den einzelnen Speicherzellen sozusagen abzulegenden Materialfaktoren können beispielsweise über eine Eingabevorrichtung EV für die verschiedenen Materialien vorab eingegeben und später gegebenenfalls ergänzt oder geändert werden. In der Figur 11 ist in Form einer Hüllkurve ein Beispiel für Verlauf des Materialfaktors F in Abhängigkeit von a wiedergegeben.

Bei den vorhergehenden Ausführungsbeispielen ist die Bewertung beziehungsweise die Ableitung des Erkennungssignals ein fortlaufender dynamischer Vorgang, bei dem kontinuierlich die Änderungswerte in die einzelnen Schaltungsstufen eingelesen werden. Nach einer Weiterbildung der Erfindung kann dieser Vorgang sozusagen diskontinuierlich erfolgen. Zu diesem Zweck werden jeweils zum Zeitpunkt des Maximalwertes eines der Änderungssignale, vorzugsweise des Phasen-Änderungssignales die Maximalwerte beider Änderungsignale ermittelt und einem Zwischenspeicher SPA für AS und SPP. für PS getrennt zugeführt. Aus diesem Zwischenspeicher werden dann anschließend diese Maximalwerte für die vektorielle Summensignalbildung entnommen und für die Ableitung der weiteren Signale, wie Phasensignal, Steuersignal und Erkennungssignal verwendet. Man erhält hierdurch eine besonders exakte Zeitrelation zwischen dem Passieren eines festzustellenden Teiles durch das Spulensystem und der Abgabe des Erkennungssignals.

Ein Ausführungsbeispiel für eine derartige Schaltung zeigt die Figur 12. Die Schaltung arbeitet ebenso wie die nach der Figur 10 auf digitaler Basis. Das Änderungssignal PS wird über eine Maximum-Erkennungsstufe MES dahingehend ausgewertet, daß ein Auslösesignal S zum Zeitpunkt des jeweiligen Maximalwertes von PS abgegeben wird. Die Auswertung von PS empfiehlt sich, weil PS von der Materialmenge des zu erkennden Materials weitgehend unabhängig ist. Das Auslösesignal S veranlaßt durch eine Aktivierung der Einleseschaltungen der Speicher SPA und SSP die Einschreibung des Maximalwertes von AS und PS. Nach dem Einschreiben werden die beiden Speicher in üblicher Weise von den A/D-Wandlern für die Zeit der weiteren Verarbeitung von AS und PS elektrisch abgetrennt. Die eingespeicherten Werte von AS und PS werden während des Abtrennzeitraumes zur weiteren Verarbeitung aus SPA bziehungsweise SPS in an sich bekannter Weise ausgelesen. Der gesamte Schaltungsteil nach der Figur 12 ist in der Figur 10 zwischen den durch a, a', b und b'kenntlich gemachten Stellen einzufügen. Die von SPA und SPP ausgelesenen Werte von AS und PS werden, nach Einfügung der 90°-Phasenschiebung dem Addierer Add zugeführt, in dem sie entsprechend den Ausführungen zur Figur 10 geometrisch zum vektoriellen Summensignal SV addiert werden.

Die Erkennung des Maximums ist relativ einfach dadurch möglich, daß nach dem Auftreten eines Änderungssignals, dessen Kurvensteigung vom Wert Null aus zunächst stetig zunimmt, im Maximum des Änderungssignals auf Null zurückgeht und anschließend negative Werte annimmt. Der dabei auftretende Nulldurchgang von positiven nach negativen Werten, beziehungsweise der Polaritätsumschlag der Kurvensteigung ist dann das Kriterium. Die Kurvensteigung ist aus dem Phasen-Änderungssignal leicht durch Differentiation in einem elektrischen Differenzierglied DG ableitbar und der Polaritätsumschlag läßt sich ohne Schwierigkeiten mittels einer Gleichrichter enthaltenden Schaltung GL feststellen, deren abgegebenes Signal, gegebenenfalls nach Verstärkung als Auslösesignal S verwendet werden kann. Ein Rückstellsignal ist zum Beispiel aus ES ableitbar.

In den Blockschaltbildern der Figur 10 und 12 sind aus Gründen der besseren Übersichtlichkeit die für Digitalschaltungen und Speicher erforderlichen sonstigen Leitungen, wie die Taktsignalleitung, Ein- und Ausleseleitungen und dergleichen und auch die dafür benötigten Schaltungen weggelassen, da dieser Schaltungsaufwand an sich allgemein bekannt ist. Die Schaltungstechnik von SPW ist beispielsweise aus DE 36 28 219 A 1 an sich bekannt.

### Bezugszeichen-Übersicht

- Add ->: Addierer zur vektoriellen Addition
- AL ->: Anschlußleitung
- AS ->: Amplituden-Änderungssignal
- AST ->: Ausgangsstufe für die Abgabe des Erkennungssignal ES
- AT ->: Schaltung zur Ableitung eines Erkennungssignals
- AZ ->: Amplitudenzweig
- B ->: Förderband
- C1,C2 ->: Kondensatoren
- BT ->: Betätigungsstufe für Schutzeinrichtungen oder dergleichen
- DG ->: Differenzierer
- ES ->: Erkennungssignal
- EV ->: Einstellvorrichtung für den Speicher SPW
- G ->: Wechselstrom-Generator
- GL ->: Gleichrichter enthaltende Schaltung zur Signalerzeugung
- MES ->: Maximum-Erkennungsschaltung zur Erzeugung des Signals S
- OP ->: Differenz-Verstärker bzw. Operationsverstärker
- OT ->: Oberteil einer Einrichtung zur Erkennung von Teilen
- PA ->: Anzeigeinstrument für die Phase
- PS ->: Phasen-Änderungssignal
- PV ->: Phasendiskriminator
- PV' ->: Phasendiskriminator
- PV" ->: Phasendiskriminator
- PU ->: Phasenumkehrstufe
- PZ ->: Phasenzweig
- S ->: Einlese-Aktivierungssignal für die Speicher SPA und SPP
- S1 ->: Sendespule zur Erzeugung eines elektromagnetischen Feldes
- S2,S3 ->: Empfangsspulen für das elektromagnetische Feld
- SG ->: Gleichrichterstufe im Amplitudenzweig AZ
- SL ->: Ausgangsleitung
- SPA ->: Zwischenspeicher für AS
- SSP ->: Zwischenspeicher für PS
- SS ->: Steuersignal
- SU ->: vektorieller Summierer
- SV ->: vektorielles Summensignal
- SWS ->: Schwellwertschaltung mit oberer und unterer Schaltschwelle
- SPW ->: Speicher für Material-Faktoren
- U1,U2 ->: an den Spulen S2 bzw. S3 abgenommene Signale
- Uemp ->: Empfangssignal am Ausgang des Differenzverstärkers OP
- Use ->: Signal des Generators G
- UT ->: Unterteil einer Einrichtung zur Erkennung von Teilen
- VG ->: einstellbares Verzögerungsglied zum Laufzeitausgleich
- α ->: Phasenwinkel zwischen PS und SV
- α' ->: Phasenwinkel zwischen AS und SV

## Patentansprüche

1. Einrichtung zur Erzeugung eines Erkennungssignals (ES) beim Auftreten von metallisch leitenden Teilen in einem zumindest weitgehend nichtleitenden Förderstrom, bei der von einem Wechselstromgenerator (G) über ein Sendespulensystem (S1) in einem zu überwachenden Abschnitt des Förderstromes ein elektromagnetisches Wechselfeld aufgebaut wird, dessen beim Passieren eines Teiles ausgelöste Amplituden- und Phasenänderungen durch ein Empfangsspulenssystem (S2, S3) und eine nachfolgende Auswerteschaltung in Form eines PhasenÄnderungssignals (PS) und eines Amplituden-Änderungssignals (AS) erfaßt werden, die der Ableitung eines materialspezifischen Erkennungssignals (ES) dienen, **dadurch gekennzeichnet, daß** eine Stufe (SU) zur vektoriellen Addition der beiden Änderungssignale (PS, AS) vorgesehen ist, daß ein Phasenvergleicher (PV') vorgesehen ist, dem zum einen das vektorielle Summensignal (SV) und zum anderen eines der beiden Änderungssignale (PS, AS) zugeführt werden und dessen Ausgangssignal, das Phasenwinkelsignal, dem Phasenwinkel zwischen dem vektoriellen Summensignal (SV) und einem der beiden Änderungssignale (PS, AS) entspricht, daß an den Phasenvergleicher (PV') eine Bewertungsstufe (SWS) für das Phasenwinkelsignal angeschaltet ist, die aus diesem ein materialspezifisch bewertetes Steuersignal (SS) ableitet, und daß an die Stufe (SU) zur vektoriellen Addition eine regelbare Ausgangsstufe (AST) angeschaltet ist, die als Regelsignal das Steuersignal (SS) erhält und deren Ausgangssignal als materialspezifisches Erkennungssignal (ES) für ein im Förderstrom befindliches, zu erkennendes Teil dient.

2. Einrichtung nach Anspruch 1, **dadurch gekennzeichnet, daß** die Bewertungsstufe (SWS) derart ausgebildet ist, daß sie in den, anderen Materialien zugeordneten Amplitudenbereichen des Phasensignals, das Steuersignal (S5) gegensinnig im Vergleich zu dem zu erkennenden Material verändert.

3. Einrichtung nach Anspruch 2, **dadurch gekennzeichnet, daß** die Bewertungsstufe (SWS) derart ausgebildet ist, daß für ein zu erkennendes Material das Steuersignal (SS) den Amplitudenwert des Ausgangsignals weitgehend unverändert beläßt, während der Amplitudenwert des Ausgangssignals für andere Materialien vermindert wird.

4. Einrichtung nach einem der Ansprüche 1 bis 3, **dadurch gekennzeichnet, daß** die Bewertungsstufe (SWS) eine Schwellwertschaltung ist, die in den, anderen Materialien zugeordneten Amplitudenbereichen des Phasensignals, das Steuersignal (SS), gegensinnig im Vergleich zu dem zu erkennenden Material verändert.

5. Einrichtung nach einem der Ansprüche 1 bis 3, **dadurch gekennzeichnet, daß** die Bewertungsschaltung (SWS) ein Amplitudenvergleicher mit einer, in der Amplitude vorzugsweise wählbaren Vergleichsspannung ist.

6. Einrichtung nach einem der vorhergehenden Ansprüche, **dadurch gekennzeichnet, daß** die Ausgangsstufe ein als Multiplizierer ausgebildet ist, der als Multiplikanden das vektorielle Summensignal (SV) und als Multiplikator das Steuersignal (SS) erhält.

7. Einrichtung nach einem der vorhergehenden Ansprüche, **dadurch gekennzeichnet, daß** an die Auswertungsschaltung für die Ableitung beider Änderungssignale (PS, AS) jeweils ein Analog-Digital-Wandler angeschaltet ist, die die Änderungsignale (PS, AS) in Digitalform umsetzen und daß die Stufe (Add) zur vektoriellen Addition und der Phasenververgleicher (PV") als digital arbeitende Schaltungen ausgebildet sind.

8. Einrichtung nach Anspruch 7, **dadurch gekennzeichnet, daß** auch die Bewertungsstufe (SWS) als digital arbeitende Schaltung ausgebildet ist.

9. Einrichtung nach Anspruch 8, **dadurch gekennzeichnet, daß** die Bewertungsstufe (SWS) ein Speicher (SPW) für die Abspeicherung von Steuersignalwerten (SS) als Materialfaktoren für vorgegebene Materialien ist, zu dessen Auslesung ein vom materialspezifischen Phasensignal abgeleitetes Auslesesignal vorgesehen ist.

10. Einrichtung nach Anspruch 9, **dadurch gekennzeichnet, daß** dem Speicher (SPW) eine Eingabevorrichtung zur Abspeicherung von Steuersignalwerten für vorgegebene Materialien in seine Speicherzellen zugeordnet ist.

11. Einrichtung nach einem der vorhergehenden Ansprüche, **dadurch gekennzeichnet, daß** zusätzlich eine, ein Betätigungssignal abgebende Betätigungsstufe vorgesehen ist, die als Eingangsignal das durch das Steuersignal (SS) veränderte vektorielle Summensignal erhält, und daß die Betätigungsstufe eine Schwellwertschaltung mit vorzugsweise einstellbarer Schwelle enthält, die derart ausgebildet ist, daß am Ausgang der Betätigungsstufe nur beim Überschreiten der Schwelle durch das veränderte vektorielle Summensignal ein Betätigungssignal abgegeben wird.

## Claims

1. A device for generating a detection signal upon occurence of metallically' conductive parts in an at least substantially non-conductive conveyer stream in which device an electromagnetic alternating field is established by an alternating current generator via a transmitting coil system in a section of the conveyor stream to be monitored, the amplitude and phase variations of the alternating field triggered when a part passes being detected by receiving coil system and subsequent evaluation circuit in the form of a phase variation signal and a amplitude variation signal, which are used to derive a material-specific detection signal, **characterized in that** a stage for vectorial addition of the phase variation signal and the amplitude variation signal is provided, that a phase comparator is provided to which on the one hand the vectorial composite signal is fed and on the other hand one of the two variation signals is fed and whose output signal (phase angle signal) corresponds to the phase angle between the vectorial composite signal and one of the two variation signals, that an evaluation stage for the phase angle signal is connected to the phase comparator which evaluation stage derives from this a control signal evaluated in a material-specific manner, and that an adjustable output stage is connected to the stage for vectorial addition, which output stage receives the control signal as an adjustment signal and whose output signal serves as an material-specific detection signal for a part to be detected which is located in the conveyer stream.

2. The device according to claim 1, **characterized in that** the evaluation stage is designed such that it changes the control signal inversely in comparison to the material to be detected in the amplitude ranges of the phase signal associated with other materials.

3. The device according to claim 2, **characterized in that** the evaluation stage is designed such that for a material to be detected, the control signal leaves the amplitude value of the output signal largely unchanged, whereas the amplitude value of the output signal is decreased for other materials.

4. The device according to one of the claims 1 to 3, **characterized in that** the evaluation stage is a threshold circuit that changes the control signal inversely in comparison to the material to be detected in the amplitude ranges of the phase signal associated with other materials.

5. The device according to one of the claims 1 to 3, **characterized in that** the evaluation circuit is an amplitude comparator having a comparison voltage that is preferably selectable in amplitude.

6. The device according to one of the preceding claims, **characterized in that** the output stage is designed as a multiplier that receives the vectorial composite signal as a multiplicand and the control signal as a multiplier.

7. The device according to one of the preceding claims, **characterized in that** in each case an analog/digital converter is connected to the evaluation circuit for the derivation of both variation signals, which convert the variation signals into digital form, and the the stage for vectorial addition and the phase comparator are designed as circuits that operate digitally.

8. The device according to claim 7, **characterized in that** the evaluation stage is also designed as a circuit that operates digitally.

9. The device according to claim 8, **characterized in that** the evaluation stage is a memory for the storage of control signal values (material factors) for specified materials, a read-out signal derived from the material-specific phase signal being provided its read-out.

10. The device according to claim 9, **characterized in that** an input apparatus is assocoated with the memory for storing control signal values for specified materials in its memory cells.

11. The device according to one of the preceding claims, **characterized in that** additionally an actuation stage emitting an actuation signal is provided, which actuation stage receives as an input signal the vectorial composite signal changed by the control signal, and that actuation stage contains a threshold circuit having a preferably adjustable threshold that is designed such that at the output of the actuation stage an actuation signal is emitted only when the threshold is exceeded by the changed vectorial composite signal.

## Revendications

1. Dispositif destiné à générer un signal de reconnaissance lors de l'apparition de pièces métalliques conductrices dans un train de convoyage d'objets au moins largement non conducteurs, dans lequel un générateur à courant alternatif crée, sur une section du train de convoyage à surveiller et au-dessus d'un système de bobines émettrices, un champ électromagnétique alternatif dont les variations d'amplitude et de phase provoquées par le passage d'une pièce sont détectées, par un système de bobines réceptrices et un circuit d'évaluation disposé en aval, sous forme d'un signal de variation de phase et d'un signal de variation d'amplitude qui servent à la formation d'un signal de reconnaissance caractéristique pour le matériau, **caractérisé par le fait qu'**il est prévu un étage destiné à l'addition vectorielle de deux signaux de variation, qu'il est prévu un comparateur de phase sur lequel sont appliqués, d'une part, le signal d'addition vectorielle et, d'autre part, un des deux signaux de variation et dont le signal de sortie (signal d'angle de phase) correspond à l'angle de phase entre le signal d'addition vectorielle et l'un des deux signaux de variation, **par le fait qu'**au comparateur de phase, est raccordé un étage d'évaluation pour le signal d'angle de phase, lequel forme, à partir de ce dernier, un signal de commande pondéré caractéristique pour le matériau, et **par le fait qu'**à l'étage destiné à l'addition vectorielle, est raccordé un étage réglable de sortie qui reçoit le signal de commande comme signal de régulation et dont le signal de sortie sert de signal de reconnaissance caractéristique pour le matériau de la pièce à reconnaître qui se trouve dans le train de convoyage.

2. Dispositif selon la revendication 1 **caractérisé par le fait que** l'étage d'évaluation est conçu de telle sorte que, dans les plages d'amplitudes du signal de phase qui correspondent à d'autres matériaux, le signal de commands est modifié en sens inverse par rapport au matériau à reconnaître.

3. Dispositif selon la revendication 2 **caractérisé par le fait que** l'étage d'évaluation est conçu de telle sorte que, pour un matériau à identifier, le signal de commande laisse la valeur d'amplitude du signal de sortie largement inchangée, alors qu'est diminuée la valeur d'amplitude du signal de sortie pour d'autres matériaux.

4. Dispositif selon l'une des revendications 1 à 3 **caractérisé par le fait que** l'étage d'évaluation est un circuit à valeur de seuil qui modifie, dans les plages d'amplitudes du signal de phase qui correspondent à d'autres matériaux, le signal de commands en sens inverse par rapport au matériau à identifier.

5. Dispositif selon l'une des revendications 1 à 3 **caractérisé par le fait que** le circuit d'évaluation est un comparateur d'amplitudes dont la tension de comparaison est, de préférence, réglable en amplitude.

6. Dispositif selon l'une des revendications précédentes **caractérisé par le fait que** l'étage de sortie est conçu sous la forme d'un multiplicateur qui reçoit, comma multiplicande, le signal d'addition vectorielle et, comme multiplicateur, le signal de commande.

7. Dispositif selon l'une des revendications précédentes **caractérisé par le fait que**, sur le circuit d'évaluation, est raccordé, pour la formation de chacun des deux signaux de variation, un convertisseur analogique-numérique qui numérise les signaux de variation et **par le fait que** l'étage destiné à l'addition vectorielle et le comparateur de phase sont conçus sous forme de circuits fonctionnant numériquement.

8. Dispositif selon la revendication 7 **caractérisé par le fait que** l'étage d'évaluation est conçu sous la forme d'un circuit fonctionnant numériquement.

9. Dispositif selon la revendication 8 **caractérisé par le fait que** l'étage d'évaluation est une mémoire, destinée à mémoriser des valeurs de signaux de commande (facteurs de matériaux) pour des matériaux prédéterminés, pour la lecture de laquelle est prévu un signal de lecture tiré du signal de phase caractéristique pour le matériau.

10. Dispositif selon la revendication 9 **caractérisé par le fait qu'**un dispositif de saisie est affecté à la mémoire pour la mémorisation dans ses cellules de mémoire de valeurs du signal de commande pour des matériaux prédéterminés.

11. Dispositif selon l'une des revendications précédentes **caractérisé par le fait qu'**il est prévu, en supplément, un étage de commande foumissant un signal de manoeuvre, lequel reçoit, comme signal d'entrée, le signal d'addition vectorielle modifié par le signal de commande et **par le fait que** l'étage de commande comprend un circuit à valeur de seuil avec un seuil préférablement réglable, conçu de telle sorte qu'un signal de manoeuvre n'est délivré à la sortie de l'étage de commande que lorsque le seuil est dépassé vers le haut par le signal d'addition vectorielle modifié.
